# EUROPÄISCHE PATENTSCHRIFT

(11) **EP 1 031 456 B1**
(45) Veröffentlichungstag und Bekanntmachung des Hinweises auf die Patenterteilung: **16.08.2006**
(21) Anmeldenummer: 00102510.5
(22) Anmeldetag: 05.02.2000
(51) Int. Cl.: B60K 35/00, B60K 37/06

(54) **Verfahren und Vorrichtung zur Unterstützung eines Benutzers eines Kraftfahrzeugs bei der Bedienung von Fahrzeugkomponenten**
Procedure and device to support a motor vehicle user when operating vehicle components
Procédé et dispositif pour assister l'utilisateur d'une automobile lors de la commande des composants

(30) Priorität: 24.02.1999 DE 19907795
(43) Veröffentlichungstag der Anmeldung: 30.08.2000
(73) Patentinhaber: DaimlerChrysler AG, 70567 Stuttgart (DE)
(72) Erfinder: Geck, Berthold, 71263 Weil der Stadt (DE); Schneider, Matthias, 70195 Stuttgart (DE)

(56) Entgegenhaltungen:
- EP-A- 0 898 377
- DE-A- 3 329 768
- DE-A- 4 410 985
- US-A- 5 844 500

## Beschreibung

Die vorliegende Erfindung betrifft ein Verfahren zur Unterstützung eines Benutzers eines Kraftfahrzeugs bei der Bedienung von Komponenten des Kraftfahrzeugs entsprechend dem Oberbegriff von Patentanspruch 1 sowie eine Vorrichtung zur Unterstützung eines Benutzers eines Kraftfahrzeugs bei der Bedienung von Komponenten des Kraftfahrzeugs entsprechend dem Oberbegriff von Patentanspruch 5.

Bei Fahrzeugen sind in den letzten Jahren die Ausstattungsumfänge zunehmend größer geworden. Mit dieser verbesserten Ausstattung geht einher, daß die Bedienung der einzelnen Komponenten in der Zusammenschau durch eine zunehmende Vielzahl von Betätigungselementen erfolgt. Zur Erläuterung dieser Betätigungselemente ist es bisher bekannt, gedruckte Bedienungsanleitungen vorzusehen. Weiterhin gibt es das Bestreben, die Betätigungselemente so auszugestalten, daß der mit dem Betätigungselement zu schaltende Betriebszustand möglichst sinnfällig ersichtlich ist. Dies gilt beispielsweise für die elektrische Sitzverstellung, bei der es bekannt ist, als Betätigungselement einen Schalter nach Art eines kleinen Sitzes vorzusehen, dessen Elemente einer Sitzfläche, einer Rückenlehne sowie einer Kopfstütze nachgeformt sind. Durch eine entsprechende Betätigung eines der Elemente wird der zugeordnete Sitz entsprechend verstellt. Ähnliches gilt beispielsweise für Schiebedächer. Im Zusammenhang mit anderen Betätigungselementen ist der Anmelderin beispielsweise auch bekannt, ein Display vorzusehen, in dessen Rand sich verschiedene Betätigungselemente finden. Der mit diesen Betätigungselementen schaltbare Betriebszustand ändert sich dabei. Der aktuell schaltbare Betriebszustand wird dabei auf dem Display angezeigt.

Aus der DE 44 10 985 A1 ist es bekannt, zu einem oder mehreren Bedienelementen einen Betriebsmodus vorzusehen, in dem zu den jeweiligen Bedienelementen eine Information ausgebbar ist. Diese Information kann auf einem Bildschirm dargestellt werden oder als akustische Information ausgegeben werden. Dabei kann in diesem Betriebsmodus die Auslösung der jeweiligen Funktion, die mit dem Bedienelement geschaltet wird, unterdrückt werden. Ebenso ist es möglich, diese Funktion auszulösen zusätzlich zu der angezeigten oder akustisch ausgegebenen Information. In diesem Fall wird die Information vorteilhaft angezeigt bzw ausgegeben, wenn erkannt wird, dass sich eine Hand dem Bedienelement nähert. Es sind nicht nur Information anzeigbar bzw. ausgebbar, die sich unmittelbar auf das Bedienelement selbst beziehen. Vielmehr können auch Informationen umfasst sein, die sich auf nachfolgend schaltbare Zustände beziehen.

Demgegenüber ist es die Aufgabe der vorliegenden Erfindung, die Unterstützung eines Benutzers zu verbessern.

Erfindungsgemäß wird dies nach Anspruch 1 durch ein Verfahren gelöst, bei dem ein Unterstützungsabfrageelement vorhanden ist, wobei nach einer Betätigung des Unterstützungsabfrageelements die Information zu dem mit dem als nächstem betätigten Betätigungselement im Normalbetrieb schaltbaren Betriebszustand ausgegeben wird.

Dies erweist sich besonders dann als vorteilhaft, wenn der Benutzer Informationen über ein bestimmtes Betätigungselement abrufen will. Indem nach der Betätigung des Unterstützungsabfrageelements die Information nur zu dem als nächstem betätigten Betätigungselement ausgegeben wird und bei darauf folgenden Betätigungen der Betätigungselemente wieder die entsprechenden Funktionen schaltbar sind, wird vorteilhaft die Bedienung vereinfacht. Der Benutzer kann die Information abrufen und unmittelbar nachdem er aufgrund der angezeigten bzw. ausgegebenen Information das richtige Betätigungselement für die gewünschte zu schaltende Funktion gefunden hat, durch ein nochmaliges Betätigen dieses Betätigungselements die Funktion schalten.

Weiterhin wird vorteilhaft erreicht, dass es keine Missverständnisse bei der Bedienung geben kann. Wenn ein System mittels eines Schalters in den Modus geschaltet wird, in dem lediglich eine Anzeige bzw. Ausgabe einer Information der schaltbaren Funktionen erfolgt, kann es zu Missverständnissen kommen, wenn ein Benutzer nach einer Betätigungs eines Bedienungselements erwartet, dass die entsprechende Funktion geschaltet wird, weil er mit dem System vertraut ist und eine Anzeige von Informationen gar nicht beachtet. Der Benutzer könnte dann denken, dass eine Funktionsstörung vorliegt.

Bei der Betätigung des Betätigungselements nach der Betätigung des Unterstützungsabfrageelementes erfolgt also keine Schaltung des jeweiligen Betriebszustands (wie dies im Normalbetrieb der Fall ist) sondern es wird vielmehr lediglich eine Information über diesen im Normalbetrieb schaltbaren Betriebszustand ausgegeben.

Dadurch wird dem Benutzer vorteilhaft die Möglichkeit gegeben, sich nach und nach mit den einzelnen Funktionen vertraut zu machen, ohne den jeweiligen Betriebszustand zu schalten. Insbesondere kann dadurch das Schalten eigentlich unerwünschter Betriebszustände durch ein suchendes Ausprobieren der Betätigungselemente vermieden werden. Außer dem Lernen "nach und nach" besteht dabei auch die Möglichkeit, bei der Einstellung von Betriebszuständen einer Komponente aktuell die schaltbaren Betriebszustände von einzelnen Betätigungselemente abzufragen.

Die Betätigung der Betätigungselemente kann dabei erfolgen, indem manuell bedienbare Betätigungselemente betätigt werden. Ebenso können diese Betätigungselemente auch aus Sprachdecodern bestehen, bei denen zumindest einzelne Komponenten sprachgesteuert bedient werden. Durch das Sprechen entsprechender Schlüsselwörter werden dabei die einzelnen Betriebszustände der Komponenten ausgewählt.

Erfindungsgemäß besteht das Unterstützungsabfrageelement aus einem Sprachdecoder. Das Unterstützungsabfrageelement kann dann beispielsweise aktiviert werden, wenn das Wort "HILFE" oder das Wort UNTERSTÜTZUNG" erkannt wird.

Die Komponenten können beispielsweise die Klimaanlage, die Sitzverstellung, ein Navigationssystem, ein Audio- und/oder Videogerät, ein Tempomat, das Fahrzeuglicht oder auch andere Fahrzeugkomponenten sein.

Bei dem Verfahren nach Anspruch 2 wird die Information auf einem Display ausgegeben.

Vorteilhaft kann dabei ein Display vorgesehen werden, das sich beispielsweise im Sichtfeld des Fahrers befindet. Die schaltbaren Betriebszustände können dann vom Fahrzeugführer einfach wahrgenommen werden.

Bei dem Verfahren nach Anspruch 3 wird die Information mittels einer Sprachausgabe ausgegeben.

Vorteilhaft kann dadurch die Aufmerksamkeit des Fahrzeugführers besser auf den Verkehr gerichtet bleiben. Außerdem kann die Information dann einfach von allen Fahrzeuginsassen wahrgenommen werden, was bei Verwendung eines Displays wegen unterschiedlicher Blickrichtungen der Fahrzeuginsassen eventuell nur eingeschränkt möglich ist.

Bei dem Verfahren nach Anspruch 4 sind nur zu einem Teil der Betätigungselemente des Fahrzeugs Informationen ausgebbar, wobei diese Betätigungselemente gesondert gekennzeichnet sind.

Es ist möglich, daß beispielsweise bei einem nachträglich eingebauten Radiogerät zu den mittels der Betätigungselemente schaltbaren Betriebszuständen des Radiogerätes keine Informationen anzeigbar sind. Vorteilhaft können also die Betätigungselemente, zu denen Informationen ausgebbar sind, entsprechend gekennzeichnet sein. Diese Kennzeichnung kann beispielsweise auch beleuchtbar sein, so daß dies auch nachts wahrnehmbar ist.

Anspruch 5 betrifft eine erfindungsgemäße Lösung, bei der eine Vorrichtung ein Unterstützungsabfrageelement aufweist, abhängig von dessen Betätigung zu der nachfolgenden Betätigung eines Betätigungselements wenigstens einer Komponente lediglich eine Information über den mit diesem Betätigungselement im Normalbetrieb schaltbaren Betriebszustand ausgebbar ist.

Zu den erreichbaren Vorteilen sei auf die Ausführungen im Zusammenhang mit Anspruch 1 verwiesen.

Nach einer Betätigung des Unterstützungsabfrageelementes wird die Information zu dem mit dem als nächstem betätigten Betätigungselement im Normalbetrieb schaltbaren Betriebszustand ausgegeben. Weiterhin ist das Unterstützungsabfrageelement in einer Aktivierungsstellung einrastbar gestaltet, wobei bei einer Aktivierung des Unterstützungsabfrageelements in der Rastposition zu allen während der Aktivierung betätigten Betätigungselementen die Information zu den jeweils im Normalbetrieb schaltbaren Betriebszuständen ausgegeben wird. Dies ist dann besonders vorteilhaft, wenn der Benutzer sich über die Bedienung einzelner oder mehrerer Komponenten einen umfassenden Überblick verschaffen will. Es ist dann möglich, durch eine nacheinander abfolgende Betätigung der Betätigungselemente eine zusammenhängende Information zu erhalten.

Der Benutzer kann erfindungsgemäß entscheiden, entscheiden ob er nur zu dem Betätigungselement, das als nächstes betätigt wird, die Information ausgegeben haben will.

Generell ist es zu allen vorbeschriebenen Ausführungsformen möglich, den Umfang der auszugebenden Informationen flexibel anzupassen. Dies kann erfolgen, indem der Umfang der auszugebenden Informationen abnimmt abhängig davon, daß das Unterstützungsabfrageelement durch den Benutzer zunehmend weniger genutzt wird. Ebenso kann eine Anpassung auch erfolgen, indem abhängig von der Gesamtbetriebszeit des Kraftfahrzeugs der Umfang der auszugebenden Informationen reduziert wird, wobei der Umfang wieder vergrößert werden kann, wenn das Unterstützungsabfrageelement häufiger genutzt wird.

Der Einsatz der Erfindung bietet sich insbesondere bei einem Fahrzeug an, bei dem die Systeme mittels eines Busses vernetzt sind, weil dann Schalterbetätigungen (Unterstützungsabfrageelement wie auch Betätigungselemente) einfach zentral abfragbar sind, so daß ohne großen Aufwand die Betätigung zur Schaltung eines Betriebszustands im Normalbetrieb von der Betätigung zur Anzeige von Informationen unterscheidbar ist, indem geprüft wird, ob das Unterstützungsabfrageelement betätigt wurde bzw. aktiviert ist.

In Kenntnis der Erfindung sei noch auf die bereits allgemein bekannte Benutzerführung hingewiesen, bei der beispielsweise bei Computersoftware eine sogenannte Hilfefunktion vorhanden ist. Mit dieser Hilfefunktion können von einem Benutzer Informationen auf dem Bildschirm angezeigt werden. Dazu können nach Auswahl eines Hilfemodus durch entsprechende weitere Eingaben und weitere Suchbegriffe zu verschiedenen Themen, die mit der Software zusammenhängen verschiedene Informationen über Funktionen der Software angezeigt werden.

Ein Ausführungsbeispiel der Erfindung ist in der Zeichnung dargestellt. Es zeigt dabei im einzelnen:
- Fig. 1:: eine Ausgestaltung einer Vorrichtung und
- Fig. 2:: einen Verfahrensablauf.

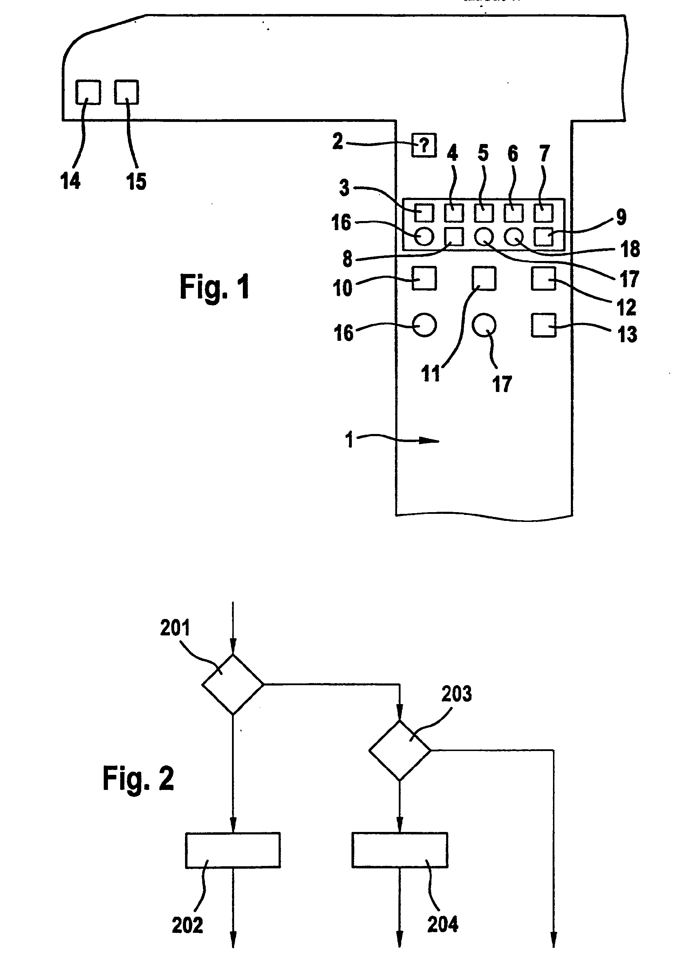

Figur 1 zeigt eine Mittelkonsole 1 eines Fahrzeugs. Auf dieser Mittelkonsole 1 ist an signifikanter Stelle ein Unterstützungsabfrageelement 2 vorgesehen. Dieses Unterstützungsabfrageelement 2 kann beispielsweise gekennzeichnet werden, indem ein deutlich wahrnehmbares Fragezeichen darauf angebracht ist. Dieses Fragezeichen kann auch beleuchtbar sein, so daß dieses Unterstützungsabfrageelement 2 auch nachts gut erkennbar ist.

Bei Betätigung des Unterstützungsabfrageelements 2 wird zu dem als nächstem betätigten Betätigungselement 3, 4, 5, 6, 7, 8, 9, 10, 11, 12, 13, 14, 15 nur eine Information über den damit im Normalbetrieb schaltbaren Betriebszustand ausgegeben ohne daß dieser Betriebszustand geschaltet wird. Zusätzlich oder alternativ kann das Unterstützungsabfrageelement 2 eine Rastfunktion aufweisen, indem dies beispielsweise als Schalter ausgebildet ist. In diesem Fall werden zu allen betätigten Betätigungselementen 3, 4, 5, 6, 7, 8, 9, 10, 11, 12, 13, 14, 15 lediglich Informationen über die damit im Normalbetrieb schaltbaren Betriebszustände ausgegeben, ohne daß eine Schaltung der Betriebszustände erfolgt.

Es ist zu sehen, daß mehrere Betätigungselemente 3, 4, 5, 6, 7, 8, 9 eine Komponente betreffen können, wobei mehrere Betriebszustände dieser Komponente über die einzelnen Betätigungselemente schaltbar sein können. Eine solche Komponente kann beispielsweise die Klimaanlage eines Fahrzeugs sein. Gegebenenfalls kann eine solche Komponente auch Betätigungselemente 16, 17, 18 aufweisen, zu denen keine Informationen ausgebbar sind. Dies können beispielsweise Betätigungselemente sein, deren Funktionsweise selbsterklärend ist wie beispielsweise die Ein-/Aus-Funktion. Vorteilhaft sind dabei die Betätigungselemente 16, 17, 18, zu denen keine Informationen anzeigbar sind, von den Betätigungselementen unterscheidbar, zu denen Informationen anzeigbar sind. In der Darstellung der Figur 1 ist dies angezeigt, indem diese Betätigungselemente eine andere Form (rund) aufweisen als die Betätigungselemente (eckig), zu denen Informationen anzeigbar sind. Anstelle einer Unterscheidung durch die Form der Betätigungselemente kann eine solche Unterscheidung beispielsweise auch durch die Beschriftung realisiert werden.

Neben den Betätigungselementen einer Komponente sind weitere Betätigungselemente 10, 11, 12, 13, 14, 15 zu sehen, zu denen ebenfalls Informationen ausgebbar sind. Diese Betätigungselemente können beispielsweise Lichtschalter o.ä. sein.

Neben diesen Betätigungselementen sind auch wiederum weitere Betätigungselemente 16, 17 zu sehen, zu denen keine Informationen ausgebbar sind.

Figur 2 zeigt einen Ablauf des Verfahrens. In dem Schritt 201 wird überprüft ob das Unterstützungsabfrageelement 2 betätigt wurde.

Ist dies der Fall, erfolgt ein Übergang zu dem Schritt 202, in dem bei der nächsten Betätigung eines Betätigungselementes, zu dem Informationen ausgebbar sind, lediglich die Information ausgegeben wird, ohne daß der zugehörige Betriebszustand geschaltet wird.

Ergab die Prüfung in dem Schritt 201, daß das Unterstützungsabfrageelement 2 nicht betätigt wurde, erfolgt ein Übergang zu dem Schritt 203, in dem überprüft wird, ob das Unterstützungsabfrageelement 2 in seiner aktivierten Stellung verrastet ist.

Ist dies nicht der Fall, ist der Durchlauf des Verfahrens beendet. Es liegt dann der Normalbetrieb vor.

Wenn das Unterstützungsabfrageelement 2 in seiner aktivierten Stellung verrastet ist, erfolgt ein Übergang zu dem Schritt 204, in dem zu den betätigten Betätigungselementen, zu denen Informationen ausgebbar sind, lediglich die Informationen ausgegeben werden, ohne daß die Betriebszustände geschaltet werden, solange das Unterstützungsabfrageelement 2 in seiner aktivierten Stellung verrastet ist.

Dies kann beispielsweise erfolgen, indem ein bestimmtes Flag gesetzt wird.

Das Unterstützungsabfrageelement 2 ist so ausgebildet, dass es mittels einer Spracherkennung betätigbar ist.

## Patentansprüche

1. Verfahren zur Unterstützung eines Benutzers eines Kraftfahrzeugs bei der Bedienung von Komponenten des Kraftfahrzeugs, wobei die Betriebszustände der Komponenten abhängig von der Betätigung von Betätigungselementen (3, 4, 5, 6, 7, 8, 9, 10, 11, 12, 13, 14, 15, 16, 17, 18) der Komponenten geschaltet werden, wobei bei einer Betätigung eines Betätigungselements (3, 4, 5, 6, 7, 8, 9, 10, 11, 12, 13, 14, 15) wenigstens einer Komponente lediglich eine Information über den mit diesem Betätigungselement (3, 4, 5, 6, 7, 8, 9, 10, 11, 12, 13, 14, 15) im Normalbetrieb schaltbaren Betriebszustand ausgegeben wird,
wobei ein Unterstützungsabfrageelement (2) vorgesehen ist,
wobei nach einer Betätigung des Unterstützungsabfrageelements (2) die Information zu dem mit dem als nächsten betätigten Betätigungselement (3, 4, 5, 6, 7, 8, 9, 10, 11, 12, 13, 14, 15) im Normalbetrieb schaltbaren Betriebszustand ausgegeben wird (201, 202) **dadurch gekennzeichnet, dass**
nach der Betätigung des Unterstützungsabfrageelementes (2) die Information nur zu dem als nächsten betätigten Betätigungselement ausgegeben wird
und bei darauf folgenden Betätigungen der Betätigungselemente (3, 4, 5, 6, 7, 8, 9, 10, 11, 12, 13, 14, 15) wieder die entsprechenden Funktionen geschaltet werden wobei das Unterstützungsabfrageelement (2) mittels einer Sprachekennung betätigt wird

2. Verfahren nach Anspruch 1,
**dadurch gekennzeichnet, daß** die Information auf einem Display ausgegeben wird.

3. Verfahren nach Anspruch 1 oder 2,
**dadurch gekennzeichnet, daß** die Information mittels einer Sprachausgabe ausgegeben wird.

4. Verfahren nach einem der Ansprüche 1 bis 3,
**dadurch gekennzeichnet, daß** nur zu einem Teil der Betätigungselemente (3, 4, 5, 6, 7, 8, 9, 10, 11, 12, 13, 14, 15, 16, 17, 18) des Fahrzeugs Informationen ausgebbar sind, wobei diese Betätigungselemente (3, 4, 5, 6, 7, 8, 9, 10, 11, 12, 13, 14, 15) gesondert **gekennzeichnet** sind.

5. Vorrichtung zur Unterstützung eines Benutzers eines Kraftfahrzeugs bei der Bedienung von Komponenten des Kraftfahrzeugs, wobei die Betriebszustände der Komponenten abhängig von der Betätigung von Betätigungselementen (3, 4, 5, 6, 7, 8, 9, 10, 11, 12, 13, 14, 15, 16, 17, 18) der Komponenten schaltbar sind,
wobei ein Unterstützungsabfrageelement (2) vorgesehen ist, abhängig von dessen Betätigung zu der nachfolgenden Betätigung eines Betätigungselements (3, 4, 5, 6, 7, 8, 9, 10, 11, 12, 13, 14, 15) wenigstens einer Komponente lediglich eine Information über den mit diesem Betätigungselement (3, 4, 5, 6, 7, 8, 9, 10, 11, 12, 13, 14, 15) im Normalbetrieb schaltbaren Betriebszustand ausgegeben wird (201, 202)
**dadurch gekennzeichnet,**
**dass** nach der Betätigung des Unterstützungsabfrageelementes (2) die Information nur zu dem als nächsten betätigten Betätigungselement ausgegeben wird und bei darauf folgenden Betätigungen der Betätigungselemente (3,4,5,6,7,8,9,10,11,12,13,14,15) wieder die entsprechenden Funktionen geschaltet werden,
wobei das Unterstützungsabfrageelement (2) mittels einer Spracherkennung betätigbar ist.

## Claims

1. Method for assisting a user of a motor vehicle in operating components of the motor vehicle, with the operating states of the components being switched as a function of the operation of operating elements (3, 4, 5, 6, 7, 8, 9, 10, 11, 12, 13, 14, 15, 16, 17, 18) of the components, with just one item of information about the operating state, which can be switched by an operating element (3, 4, 5, 6, 7, 8, 9, 10, 11, 12, 13, 14, 15) of at least one component during normal operation, being output when this operating element (3, 4, 5, 6, 7, 8, 9, 10, 11, 12, 13, 14, 15) is operated, with an assistance interrogation element (2) being provided,
with the information relating to the operating state, which can be switched by the operating element (3, 4, 5, 6, 7, 8, 9, 10, 11, 12, 13, 14, 15) which is operated next during normal operation, being output (201, 202) following operation of the assistance interrogation element (2),
**characterized in that** the information is output only to the operating element which is operated next following operation of the assistance interrogation element (2), and the corresponding functions are switched again when the operating elements (3, 4, 5, 6, 7, 8, 9, 10, 11, 12, 13, 14, 15) are subsequently operated,
with the assistance interrogation element (2) being operated by means of voice recognition.

2. Method according to Claim 1,
**characterized in that** the information is output on a display.

3. Method according to Claim 1 or 2,
**characterized in that** the information is output by means of a voice output.

4. Method according to one of Claims 1 to 3,
**characterized in that** information can be output only to some of the operating elements (3, 4, 5, 6, 7, 8, 9, 10, 11, 12, 13, 14, 15, 16, 17, 18) of the vehicle, with these operating elements (3, 4, 5, 6, 7, 8, 9, 10, 11, 12, 13, 14, 15) being separately identified.

5. Apparatus for assisting a user of a motor vehicle in operating components of the motor vehicle, it being possible to switch the operating states of the components as a function of the operation of operating elements (3, 4, 5, 6, 7, 8, 9, 10, 11, 12, 13, 14, 15, 16, 17, 18) of the components,
with an assistance interrogation element (2) being provided and just one item of information about the operating state, which can be switched by an operating element (3, 4, 5, 6, 7, 8, 9, 10, 11, 12, 13, 14, 15) of at least one component during normal operation, being output (201, 202) as a function of the said assistance interrogation element (2) being operated for subsequently operating this operating element (3, 4, 5, 6, 7, 8, 9, 10, 11, 12, 13, 14, 15),
**characterized**
**in that** the information is output only to the operating element which is operated next following operation of the assistance interrogation element (2),
and the corresponding functions are switched again when the operating elements (3, 4, 5, 6, 7, 8, 9, 10, 11, 12, 13, 14, 15) are subsequently operated,
with the assistance interrogation element (2) being operated by means of voice recognition.

## Revendications

1. Procédé d'assistance d'un utilisateur d'un véhicule automobile lors de la manipulation de composants du véhicule automobile, les états de service des composants étant commutés en fonction de l'actionnement d'éléments de manoeuvre (3, 4, 5, 6, 7, 8, 9, 10, 11, 12, 13, 14, 15, 16, 17, 18) des composants, lors d'un actionnement d'un élément de manoeuvre (3, 4, 5, 6, 7, 8, 9, 10, 11, 12, 13, 14, 15) d'au moins un composant, seulement une information au sujet de l'état de service pouvant être commuté en exploitation normale par l'intermédiaire de ce composant (3, 4, 5, 6, 7, 8, 9, 10, 11, 12, 13, 14, 15) étant délivré, un assistant d'interrogation-réponse (2) étant prévu,
après un actionnement de l'élément de manoeuvre (2), l'information concernant l'état de service pouvant être commuté en exploitation normale avec le prochain élément de manoeuvre actionné (3, 4, 5, 6, 7, 8, 9, 10, 11, 12, 13, 14, 15) étant délivré (201, 202),
**caractérisé en ce qu'**après l'actionnement de l'assistant d'interrogation-réponse (2), l'information n'est délivrée que vers le prochain élément de manoeuvre actionné
et lors d'un actionnement consécutif des éléments de manoeuvre (3, 4, 5, 6, 7, 8, 9, 10, 11, 12, 13, 14, 15), les fonctions correspondantes sont de nouveau commutées, l'assistant d'interrogation-réponse (2) étant actionné par une reconnaissance vocale.

2. Procédé selon la revendication 1, **caractérisé en ce que** l'information s'affiche sur un écran.

3. Procédé selon la revendication 1 ou 2, **caractérisé en ce que** l'information est délivrée au moyen d'une réponse vocale.

4. Procédé selon l'une quelconque des revendications 1 à 3, **caractérisé en ce que** seulement des informations concernant une partie des éléments de manoeuvre (3, 4, 5, 6, 7, 8, 9, 10, 11, 12, 13, 14, 15, 16, 17, 18) du véhicule peuvent être délivrées, lesdits éléments de manoeuvre (3, 4, 5, 6, 7, 8, 9, 10, 11, 12, 13, 14, 15) étant identifiés à part.

5. Dispositif d'assistance d'un utilisateur d'un véhicule automobile lors de la manipulation de composants du véhicule automobile, les états de service des composants pouvant être commutés en fonction de l'actionnement d'éléments de manoeuvre (3, 4, 5, 6, 7, 8, 9, 10, 11, 12, 13, 14, 15, 16, 17, 18) des composants,
un assistant d'interrogation-réponse (2) étant prévu, en fonction de l'actionnement duquel, pour l'actionnement suivant d'un élément de manoeuvre (3, 4, 5, 6, 7, 8, 9, 10, 11, 12, 13, 14, 15) d'au moins un composant, une information est seulement délivrée au sujet de l'état de service (201, 202) pouvant être commuté par l'intermédiaire de cet élément de manoeuvre (3, 4, 5, 6, 7, 8, 9, 10, 11, 12, 13, 14, 15), en exploitation normale
**caractérisé en ce qu'**après l'actionnement de l'assistant d'interrogation-réponse (2), l'information n'est délivrée que vers le prochain élément de manoeuvre à actionner
et lors de l'actionnement suivant des éléments de manoeuvre (3, 4, 5, 6, 7, 8, 9, 10, 11, 12, 13, 14, 15), les fonctions correspondantes sont à nouveau commutées, l'assistant d'interrogation-réponse (2) pouvant être actionné au moyen d'une reconnaissance vocale.
